# EUROPEAN PATENT APPLICATION

(11) **EP 1 182 540 A1**
(43) Date of publication of application: **27.02.2002**
(21) Application number: 00118414.2
(22) Date of filing: 24.08.2000
(51) Int. Cl.: G06F 3/00, G06F 3/023

(54) **Method and device to manipulate a data set**

(71) Applicant: Sony International (Europe) GmbH, 10785 Berlin (DE)
(72) Inventor: Michelitsch, Georg, Advanced Technology Center, Hedelfinger Strasse 61, 70327 Stuttgart (DE)
(74) Representative: Müller . Hoffmann & Partner Patentanwälte

(57) **Abstract**

A method to allow manipulation of a data set which can be visualized in the form of at least one graph (1) respectively representing one parameter of the data set comprises the following steps setting a predetermined number of control points onto said graph (1), wherein said predetermined number corresponds to a number of haptic softkeys (6 - 9; 6' - 9') of a manipulation device, allowing the manipulation of a characteristic of the graph (1) at a control point (2 - 5; 2' - 5') with an associated softkey which provides a haptic feedback corresponding to the characteristic which can be manipulated, and weighting the data set according to the resulting graph (1). Therefore, a manipulation device for a data set which can be visualized in the form of a graph (1), comprises a predetermined number of haptic softkeys (6 - 9; 6' - 9') respectively allowing a manipulation of a characteristic of said graph (1) at a control point (2 - 5; 2' - 5') of the graph (1), wherein the control point (2 - 5; 2' - 5') is assigned to the respective haptic softkey (6 - 9; 6' - 9') which provides a haptic feedback of the characteristic of said graph (1) at said control point (2 - 5; 2' - 5').

## Description

The present invention relates to the manipulation of data sets, in particular to a method to allow manipulation of a data set which can be visualized in the form of a graph and to a manipulation device for such a data set.

Generally, it is difficult to browse large data sets, in particular, if screen size and number of control elemets are limited like in case of portable devices, such as remote controls. The traditional techniques such as to use buttons and dials, as well as speech technology alone do not offer an easy and intuitive way of manipulation of a data set.

Therefore, it is the object underlying the present invention to provide an improved method to allow manipulation of a data set and manipulation device therefore.

According to the present invention the method to allow manipulation of a data set which can be visualized in the form of a graph is characterized by setting a predetermined number of control points onto said graph, wherein said predetermined number corresponds to a number of haptic softkeys of a manipulation device, allowing the manipulation of a characteristic of the graph at a control point of an associated softkey which provides a haptic feedback corresponding to the characteristic which can be manipulated, and weighting the data set according to the resulting graph.

The manipulation device for a data set which can be visualized in the form of a graph according to the present invention is characterized by a predetermined number of haptic softkeys respectively allowing a manipulation of a characteristic of said graph at a control point of the graph, wherein the control point is assigned to the respective haptic softkey which provides a haptic feedback of the characteristic of said graph at said control point.

Preferred embodiments of this method according to the present invention defined in independent claim 1 and this manipulation device according to the present invention defined in independent claim 12 are respectively defined in the respective following dependent subclaims.

Preferably, the graph is determined as an envelope function of the data set-which might be ranged into classes. In this case, the data set which might be ranged into classes is preferably at least partly ordered. Further, a number of classes might be set according to the number of control points or higher than the number of control points. In these cases a manipulation of a control point might influence the graph only within a class into which the control point falls or might influence the whole graph similar to the manipulation of a spline curve, e.g. a B-spline curve, a polynomial function and/or in such a way that an "energy of the graph" is kept constant, which could e.g. mean that the integral of the graph, i.e. the area between the graph and the abscissa, is kept constant. Further, also other methods to influence the whole graph might be used, e.g. after change of an amplitude a minimization of the 2nd derivation of the graph, i.e. to obtain a graph with smallest possible curvature, or a discrete function which influences only predetermined parts of the graph, e.g. a predetermined number of neighbouring classes. Also integrals and derivations of another order can be used. Further, the ordering according to at least one criterion (partly ordering) leads to a definite rule of influencing the data set after manipulation of the graph. In case e.g. class of "Pop Titles" would comprise 100 different entries, i.e. titles, which are ordered accordingto an increasing publication date, a decrease of the class to e.g. 60 entries would lead to a removing of the 40 oldest titles.

According to the present invention preferably a control point can be moved along the graph. Further, the characteristic of the graph at a control point might include an amplitude, a gradient, and/or a curvature of the graph at the control point. Still further, the haptic feedback might be a force proportional to a value of the characteristic of the graph at a control point and/or the haptic softkeys might be arranged in an aligned fashion. Also, initially an assignment of control points to the haptic softkeys might be selected so that adjacent control points correspond to adjacent haptic softkeys.

Therewith, the present invention defines a method to allow the manipulation of a data set which can be visualized in the form of a graph. The user can manipulate the data through control points defined on a curve bounding the data set, like for example with B-spline curves. These control points are associated with the softkeys of the manipulation device. Through force feedback, the user can feel how the curve is transformed. Upon release of the softkey the last adjusted value can be applied to the curve. The experience could be compared with forming clay with one's hand. Also other comparison models could be designed, like forming foam rubber, according to which a manipulation would always start from a maximum value and leads to a decrease, but also extends back to the maximum value when a force applied by a user is reduced. However, the selection of an adjusted value would then have to be performed with a seperate means, since the release of the softkey leads to a setting to the maximum value. Alternatively to the starting from a maximum value the softkeys could also be supplied with a function to reverse the direction of influence, e.g. by providing a ring into which a user can insert the finger to also pull the softkey instead of only pushing it. Possible applications for this technique include the tone control of audio equipment including equalizer settings, and adjusting the color balance of a TV set.

Another application is large data sets to be visualized on a screen. For example, data retrieved from an electronic programming guide (EPG) can be classified into genres such as comedy, action movie, soap operas and so on. By assigning one haptically enhanced soft key to such a category, the user can convey his preferences to the system. Depressing a key reduces the weighting of the associated category, which can be felt through increased resistance. The other categories could then expand to compensate, if the underlying software implements a sort of "conserving energy" rule. A reduction in the weighting of one category would result in a different filter setting to be applied to the data set. In other words, the system presents only a subset of program entries which conform to the filter setting defined by the position of the soft keys. As the user will be able to feel and remember a particular filter setting through the force feedback provided by the device.

The above description shows that a data set is not necessarily build by pairs of elements, but can also be build by triples or any other number of elements to build one entry of the data set. In this case it is of course possible to visualize the data set not only as one graph, but as several graphs each of which can be manipulated by the method according to the present invention, or to visualize the data set as multidimensional graph instead of using several two-dimensional graphs.

The manipulation device according to the present invention advantageously provides said predetermined number of haptic softkeys arranged in an aligned fashion. Further advantageously, a control point setting means is provided to at least one control point along the graph. In this case a control point selection means might be provided to select a control point set along the graph and further a control point adjustment means might be provided to move a selected control point along the graph.

Further preferably, said manipulation device according to the present invention comprises an envelope curve determination means to determine said graph on basis of a data set.

Still further preferably, said manipulation device according to the present invention comprises a display for displaying said graph and said control points beside said haptic softkeys.

Preferably, four haptic softkeys are provided, since these can be easily manipulated with the four fingers of one hand of a user. Additionally, a rotary dial might be provided which simultaneously might be manipulatable with the user's thumb while holding the manipulation device in one hand.

As is obvious to a skilled person, the manipulation of a data set according to the present invention can be modified in various ways without departing from the scope of the present invention, i. e. a different function than the envelope function can determine the graph which represents the data set and/or a different number of haptic softkeys can be provided.

Also, the term softkey as used in this description of the present invention is not limited to commercially available softkeys as such which are preferably used, but equivalent means such as haptic rotary dials or other haptic input/output units are also to be understood under this definition. In particular, means are comprised which allow the manipulation of the curve in two or more degrees of freedom, such as haptic softkeys which are provided with a ring through which a user can insert finger to push, pull, turn and/or slide the haptic softkey. Different degrees of freedom and/or directions of movement might then result in a manipulation of a different parameter of the curve at the control point, e.g. push/pull changes the amplitude, sliding changes the gradient, and turning changes the curvature.

Therefore, the present invention allows the user to "shape" the characteristics of a data set, such as filter settings, with motoric skills, enables the user to easily remember certain settings by the way the curve describing the data is "formed", and provides for a hardware design that works with a small number of softkeys, typically four, and yet allows the user to manipulate a complex data set with ease.

Further features and advantages of the present invention will become apparent from the following detailed description of an exemplary embodiment thereof taken in conjunction with the accompanying drawings, wherein
- **Fig. 1**: shows a schematic view of data group into classes with control points for adjusting parameter settings,
- **Fig. 2**: shows a schematic view of a control point being moved along a curve with a manipulation device according to a first preferred embodiment of the present invention, and
- **Fig. 3**: shows a schematic view of second preferred embodiment of a manipulation device according to the present invention.

According to the present invention a data set gets categorized into classes so that an element of the data set belongs to exactly one class, i. e. the classification is performed according to the classic definition. Within a class, all elements can be ordered according to at least one criterion, i.e an at least partially ordered set is generated.

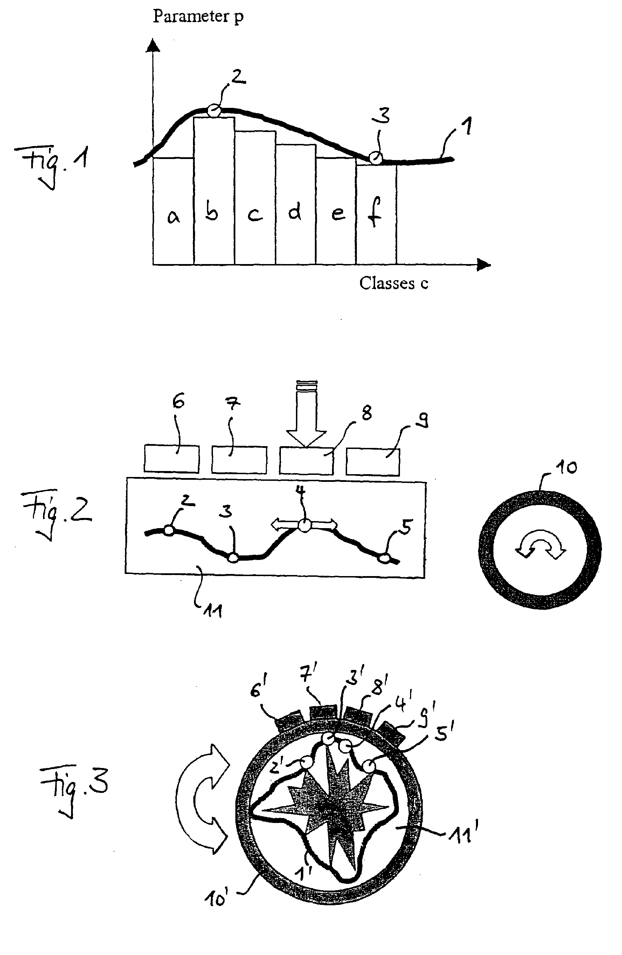

Fig. 1 shows a data set grouped into six classes a to f. All available classes, i. e. the classes a - f, are arranged adjacent to each other at the abscissa of the diagram shown in Fig. 1 and a parameter p according to which all classes are ordered is shown on the ordinate. In the example shown in Fig. 1 the six classes a - f all have an equal width, but an individual height, i. e. a different amount of contents of the parameter p within the respective classes is provided. Therefore, six equal wide blocks with different heights are arranged besides each other in the diagram shown in Fig. 1. An example for such a classification could be the division of a hearable frequency band into six subbands with equal bandwidth, but different volume within each subband, wherein the frequency is shown on the abscissa of the graph, i. e. the axis of the classes c, and the volume is shown on the ordinate, i. e. the axis showing the values of the parameter p, which in this case would be values of volume available within a respective class, i.e. frequency band.

The values of the parameter p within each class are to be manipulated via the haptic manipulation device according to the present invention. Therefore, first a graph is assigned to the data set, e. g. as shown in Fig. 1 an envelope function 1 which is defined as a curve bounding the data set, i. e. a curve indicating the values of the parameter p over the classification of the data set. Thereafter, control points 2, 3 are set on this graph in accordance with a number of haptic softkeys of the manipulation device. Fig. 1 shows a third set control point 4 and a fourth set control point 5 within the function, namely the third control point 4 within the class b and the fourth control point 3 within the class f.

The control points are the means to adjust the parameter values which in turn are used to manipulate the underlying data set. As can be seen in Fig. 1 there are cases where the number of available control points is less than the number of categories into which the data set is classified. As will be explained further below, the assignment of haptic keys to control points according to the present invention is generally variable, i. e. the control points can be moved along the graph so that it can be associated to a different class.

To manipulate a control point with an haptic softkey generally two ways are possible:
1. Each control point manipulates exactly one class of the data set independently of the other classes, and
2. each control point manipulates a control element of the curve that represents the complete data set so that adjusting one control point can potentially modify the parameter values of more than one control point in the data set; in this case also discrtete functions are possible, i.e. a variation only within a variable number of classes.

As mentioned above, generally an amplitude, a gradient and/or a curvature of the graph at the control point can be modified.

Fig. 2 shows a conceptional view of a manipulation device according to a first preferred embodiment of the present invention and further elucidates a method to move a control point along the graph representing the data set, i. e. the parameter of the data set to be modified.

The manipulation device comprises four softkeys 7 to 9 which are arranged above a long side of a horizontally arranged rectangular display 11 at which right short side a rotary dial 10 is provided. The display 11 shows the graph 1 and the first and second control points 2, 3 as well as third and fourth control points 4, 5.

In an initial state the first to fourth control points 2 to 5 are assigned to the first to fourth softkeys 6 to 9 so that a control point associated to a softkey is lying approximately beneath the softkey. Therewith, the outermost left first control point 2 on the graph 1 is assigned to the first softkey 6 which also has the outermost left position. Neighboring the first control point 2 on the right hand side lies the second control point 3 which is assigned to the second softkey 7 arranged on the right side of the first softkey 6. Further right, the third control point 4 is assigned to the third softkey 8 which lies on the right hand side beside the second softkey 7 and outermost right the fourth control point 5 is assigned to the outermost right arranged fourth softkey 9.

According to the first preferred embodiment of the present invention the user can slightly depress one softkey to activate the association between the softkey and the control point. In the shown example the third softkey 8 is slightly depressed and the activation of the association between the third softkey 8 and the third control point 4 is indicated on the display 11 by a double arrow pointing to the left and right directions of the third control point 4. While keeping the softkey slightly depressed the user can rotate the rotary dial 10 to freely move the control point along the curve 1, i. e. only within one category, or to the neighboring or another category, or also further then a neighboring control point. Further depressing of the softkey activates not only the association between the softkey and the control point as described before, but the possibility to change the characteristic of the graph at the control point as will be explained further below.

Fig. 3 shows a second embodiment of a manipulation device according to the present invention. In this case the rotary dial 10 and the first to fourth haptic softkeys 7 to 9 are combined in one piece of hardware, i. e. a ring 10' with first to fourth haptic softkeys 6' to 9' thereon, with a circular screen 11' centered in the middle. The data is displayed on the screen in such a form that all categories are arranged in a star-like shape. However, the operation is basically similar to that of the first embodiment, i. e. a haptic softkey is slightly depressed to activate the association between the softkey and the control point whereafter the whole piece of hardware including the ring 10' and the four haptic softkeys 6' to 9' can be turned in order to move the associated control point into the direction of the rotation.

Alternatively, the association of the softkeys and control points is predetermined by the location of the softkeys. As a result with rotation of the rotary dial and therewith of the softkeys the associated control points move along the curve.

Naturally, the interaction between the user and the system is not restricted to manipulation of one data set, but can be extended to manipulating many different data sets including data sets, which represent commands that can be issued to the system. One possible means to select a different data set would be the above mentioned rotary dial. Whenever this dial is rotated without an additional softkey depressed, a different data set would be selected. Of course, this scheme is also applicable to select different parameters which should be manipulated of one data set, e. g. volume or delay within a predetermined frequency range.

In addition to the means of selecting control points and/or data sets as explained above, different user interaction modalities could be used as well. In particular, speech input can be very effective in order to select a data set or to assign a control point to a specific category of data.

Independent of the various ways of assigning the softkeys to the control points two methods are distinguished to actually change the parameters controlled by the control point:
1. Depressing one softkey results into changing the value of the parameter associated with the control point. As a result, the values of all other parameters associated with the remaining control points change in such a way that the sum of all parameter values is kept constant. The definition of "sum" is not necessarily restricted to an arithmetic sum, but can be any mathematical formula that results in a behavior resembling the concept of "conservation of energy" as explained above. Since the haptic softkeys move according to the position of the control points, the user will experience a sensation similar to forming clay models. This method allows for a direct way of setting values. Reversing a decrease in the value of one parameter requires the other parameter values to be decreased in order to achieve the objective due to the "conservation of energy" concept.
2. Depressing one softkey changes the value of the parameter associated with the control point without effecting the remaining control points. The user feels a reactive force proportional to the value of the associated parameter. In order to make a value setting permanent, an additional control element has to be activated or the release of the softkey might be monitored. Furthermore, since the haptic keys might allow only decreasing the value of a parameter, an inverse operation for increasing the value has to be provided as well, which can be done either providing the above-mentioned softkeys in pairs or by having a switch toggle between changing parameters in the positive or negative direction. Alternatively, haptic softkeys which allow decreasing and increasing the value might be provided as explained above.

## Claims

1. Method to allow manipulation of a data set which can be visualized in the form of a graph (1), **characterized by**
- setting a predetermined number of control points (2 - 5; 2' - 5') onto said graph (1), wherein said predetermined number corresponds to a number of haptic softkeys (6 - 9; 6' - 9') of a manipulation device,
- allowing the manipulation of a characteristic of the graph (1) at a control point (2 - 5; 2' - 5') with an associated softkey which provides a haptic feedback corresponding to the characteristic which can be manipulated, and
- weighting the data set according to the resulting graph (1).

2. Method according to claim 1, **characterized in that** the graph (1) is determined as an envelope function of the data set which is ranged into classes (a - f).

3. Method according to claim 2, **characterized in that** the data set which is ranged into classes (a - f) is at least partly ordered within a respective class (a - f).

4. Method according to claim 2 or 3, **characterized in that** a number of classes is set according to the number of control points.

5. Method according to claim 2 or 3, **characterized in that** a number of classes (a - f) is set higher than the number of control points (2 - 5; 2' - 5').

6. Method according to anyone of claims 2 to 5, **characterized in that** a manipulation of a control point (2 - 5; 2' - 5') influences the graph (1) only within a class (a - f) into which the control point (2 - 5; 2' - 5') falls.

7. Method according to anyone of claims 2 to 5, **characterized in that** a manipulation of a control point (2 - 5; 2' - 5') influences the whole graph (1) like the manipulation of a spline curve, a polynomic function, and/or or in such a way that the graph is influenced so that an integral or a derivation of the graph (1) behaves according to a predetermined function.

8. Method according to anyone of the preceding claims, **characterized in that** a control point (2 - 5; 2' - 5') can be moved along the graph (1).

9. Method according to anyone of the preceding claims, **characterized in that** the characteristic of the graph (1) at a control point (2 - 5; 2' - 5') includes an amplitude, a gradient and/or a curvature of the graph (1) at the control point (2 - 5; 2' - 5').

10. Method according to anyone of the preceding claims, **characterized in that** the haptic feedback is a force proportional to a value of the characteristic of the graph (1) at a control point (2 - 5; 2' - 5').

11. Method according to anyone of the preceding claims, **characterized in that** the haptic softkeys (6 - 9; 6' - 9') are arranged in an aligned fashion and the assignment of control points (2 - 5; 2' - 5') to the haptic softkeys (6 - 9; 6' - 9') is selected so that adjacent control points (2 - 5; 2' - 5') correspond to adjacent haptic softkeys (6 - 9; 6' - 9').

12. Manipulation device for a data set which can be visualized in the form of a graph (1), **characterized by** a predetermined number of haptic softkeys (6 - 9; 6' - 9') respectively allowing a manipulation of a characteristic of said graph (1) at a control point (2 - 5; 2' - 5') of the graph (1), wherein the control point (2 - 5; 2' - 5') is assigned to the respective haptic softkey (6 - 9; 6' - 9') which provides a haptic feedback of the characteristic of said graph (1) at said control point (2 - 5; 2' - 5').

13. Manipulation device according to claim 12, **characterized in that** said predetermined number of haptic softkeys (6 - 9; 6' - 9') is arranged in an aligned fashion.

14. Manipulation device according to claim 12 or 13, **characterized by** a control point setting means to set at least one control point (2 - 5; 2' - 5') along the graph (1).

15. Manipulation device according to claim 14, **characterized by** a control point selection means (6 - 9; 6' - 9') to select a control point (2 - 5; 2' - 5') set along the graph (1).

16. Manipulation device according to claim 15, **characterized by** a control point adjustment means (10; 10') to move a selected control point (2 - 5; 2' - 5') along the graph (1).

17. Manipulation device according to anyone of claims 12 to 16, **characterized by** an envelope curve determination means to determine said graph (1) on basis of a data set.

18. Manipulation device according to anyone of claims 12 to 17, **characterized by** a display (11, 11') for displaying said graph (1) and said control points (2 - 5; 2' - 5') beside said haptic softkeys (6 - 9; 6' - 9').

19. Manipulation device according to anyone of claims 12 to 18, **characterized in that** said softkeys (6' - 9') and said adjustment means (10') are combined in one piece of hardware **in that** a rotable ring (10') is provided on which the softkeys (6' - 9') are arranged.
